# EUROPEAN PATENT APPLICATION

(11) **EP 4 188 029 A1**
(43) Date of publication of application: **31.05.2023**
(21) Application number: 21857455.6
(22) Date of filing: 23.07.2021
(51) Int. Cl.: H04W 76/10

(54) **COMPUTING TASK PROCESSING METHOD, COMMUNICATION DEVICE AND WIRELESS NETWORK ARCHITECTURE**

(30) Priority: 17.08.2020 CN 202010827494
(71) Applicant: Huawei Technologies Co., Ltd., Shenzhen, Guangdong 518129 (CN)
(72) Inventor: PENG, Chenghui, Shenzhen, Guangdong 518129 (CN); WU, Jianjun, Shenzhen, Guangdong 518129 (CN); DAI, Mingzeng, Shenzhen, Guangdong 518129 (CN)
(74) Representative: Goddar, Heinz J.
(86) International application number: PCT/CN2021/108232
(87) International publication number: WO 2022/037360

(57) **Abstract**

This application provides a computation task processing method, a communication apparatus, and a wireless network architecture to reduce a processing delay of a computation task. The wireless network architecture includes a computation plane. The computation plane is connected to a control plane through a first interface, and is connected to a user plane through a second interface. The method includes: receiving, by the computation plane, a message of the computation task from a task source, where the task source may be at least one of the control plane, the user plane, or an application. The computation plane executes the computation task after receiving the message of the computation task. By deploying a computation plane in a wireless network, a terminal device can establish a connection to the computation plane deployed in the wireless network, implementing data exchange between the terminal device and the computation plane. In this way, a processing delay of a computation task can be effectively reduced.

## Description

### CROSS-REFERENCE TO RELATED APPLICATIONS

This application claims priority to Chinese Patent Application No. 202010827494.6, filed with the China Patent Office on August 17, 2020 and entitled "COMPUTATION TASK PROCESSING METHOD, COMMUNICATION APPARATUS, AND WIRELESS NETWORK ARCHITECTURE", which is incorporated herein by reference in its entirety.

### TECHNICAL FIELD

Embodiments of this application relate to the field of communication technologies, and in particular, to a computation task processing method, a communication apparatus, and a wireless network architecture.

### BACKGROUND

With the commercial deployment of networks and the rise of industrial applications, requirements for computing resources (also referred to as computing power) are getting higher. Some communication scenarios have relatively high requirements on instantaneity of computation tasks. Generally, a computation request of a terminal device needs to pass by a data computation center. The data computation center is owned by a data service provider. The data computation center is usually deployed at a position far away from a wireless network. If data directly passes by the remote data computation center, a data transmission time is long, a delay loss is caused, and the instantaneity requirement of the computation task cannot be met.

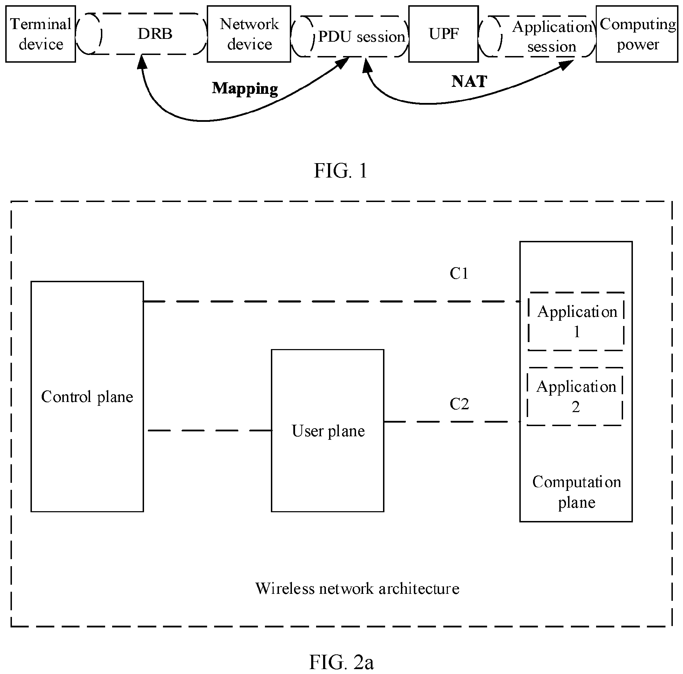

As shown in FIG. 1, in a conventional service data processing protocol procedure, a terminal device establishes a radio bearer (data radio bearer, DRB) with a network device. After uplink data on the DRB is processed by a wireless access protocol layer, the network device forwards the uplink data on the DRB to a corresponding PDU session based on a mapping between the DRB and a core network protocol data unit (protocol data unit, PDU) session, and sends the PDU session to a core network gateway user plane function (user plane function, UPF). The UPF processes routing information in the uplink data, and converts the PDU session into an application session to communicate with an application on computing power deployed in a data network (data network, DN). The PDU session may be converted into the application session in a network address translation (network address translation, NAT) manner. In such a conventional service data processing protocol procedure, the network device, the core network UPF and the DN in an access network need to perform a plurality of times of carrying and session mapping, resulting in many times of signaling processing and data protocol processing.

How to reduce a processing delay of a computation task is a technical problem that needs to be resolved urgently.

### SUMMARY

Embodiments of this application provide a computation task processing method, a communication apparatus, and a wireless network architecture to reduce a processing delay of a computation task.

According to a first aspect, a computation task processing method is provided. The method is applied to a computation plane in a network device and a task source. The computation plane is connected to a control plane through a first interface, and is connected to a user plane through a second interface. The method includes the following steps: The task source sends a message of a computation task to the computation plane; the computation plane receives the message of the computation task from the task source, where the task source includes any one of the control plane, the user plane, or a third party; and after receiving the message of the computation task from the task source, the computation plane executes the computation task based on the message of the computation task. By deploying the computation plane in the network device, a terminal device can establish a connection to the computation plane deployed in the network device, implementing data exchange between the terminal device and the computation plane. In this way, a processing delay of the computation task can be effectively reduced.

The third party may be, for example, a core network, an OSS, a BSS, or an application. The application herein may be an application other than the network device.

The control plane may be a control plane in the network device, or may be a control plane in another network device. The user plane may be a user plane in the network device, or may be a user plane in another network device.

The computation task in this embodiment of this application may be a task of the control plane, a task of the user plane, or a task of an application in the computation plane, for example, a task related to an application such as AI, perception, AR, industry control, holographic projection, IoT, self-driving, a robot, a drone, or the tactile internet.

In a possible design, the message of the computation task may be a loading message of the computation task, an update message of the computation task, or a deletion message of the computation task. The computation plane may load the computation task based on the loading message of the computation task. The computation plane may update the computation task based on the update message of the computation task. The computation plane may delete the computation task based on the deletion message of the computation task.

In a possible design, the task source sends a first message to the computation plane, and the computation plane receives the first message from the task source, where the first message is used to request to establish the computation task, and the first message includes one or more of the following: an identifier of the computation task, a type of the computation task, a computing resource required by the computation task, a data source required by the computation task, an execution cycle of the computation task, a security requirement of the computation task, a performance requirement of the computation task, or execution logic of the computation task. The first message may be referred to as a task request message. The computation plane may estimate whether the computation task can be accepted based on the first message. Optionally, if the computation plane determines that the computation task can be accepted, the computation plane may further return an acknowledgment message to the task source.

In a possible design, the computation plane returns an execution result of the computation task to the task source, and the task source receives the execution result of the computation task from the computation plane.

In a possible design, the computation plane sends a second message to the control plane, where the second message is used to request to establish a radio bearer between the computation plane and the terminal device. The radio bearer may be used to carry related data and signaling of the computation task.

In a possible design, when the task source is the third party, the third party may send the message of the computation task to the computation plane through an integration control unit, and the computation plane receives the message of the computation task from the third party through the integration control unit.

Optionally, the integration control unit is connected to the control plane, the user plane, or the computation plane through a third interface.

In a possible design, the computation plane sends a registration message to the integration control unit, and the integration control unit receives the registration message from the computation plane. The registration message is used to request to register the computation task.

In a possible design, the loading message includes the identifier of the computation task and/or the execution logic of the computation task, and the execution logic includes one or more of the following: a segment of executable code, an executable file, or an image file that can be loaded to a computation container.

In a possible design, the task source sends the update message of the computation task to the computation plane, the computation plane receives the update message of the computation task from the task source, and the computation plane updates the computation task based on the update message.

In a possible design, the task source sends the deletion message of the computation task to the computation plane, the computation plane receives the deletion message of the computation task from the task source, and the computation plane deletes the computation task based on the deletion message.

According to a second aspect, a wireless network architecture is provided, including a computation plane. The computation plane is connected to a control plane through a first interface, and is connected to a user plane through a second interface. The computation plane is configured to perform the method performed by the computation plane according to the first aspect or any possible design of the first aspect. By deploying a computation plane in a wireless network, a terminal device can establish, through a radio bearer, a connection to the computation plane deployed in the wireless network, implementing data exchange between the terminal device and the computation plane. In this way, a processing delay of a computation task can be effectively reduced.

According to a third aspect, a communication apparatus is provided. The apparatus may be a computation plane in a network device, or may be an apparatus (for example, a chip, a chip system, or a circuit) in a computation plane. The apparatus has a function of implementing the method performed by the computation plane according to the first aspect or any possible design of the first aspect. The function may be implemented by hardware, or may be implemented by hardware executing corresponding software. The hardware or the software includes one or more modules corresponding to the foregoing function. The computation plane is connected to a control plane through a first interface, and is connected to a user plane through a second interface. In a design, the apparatus may include a communication module and a processing module. For example, the communication module is configured to receive a loading message of a computation task from a task source, where the task source includes any one of the control plane, the user plane, or a third party; and the processing module is configured to execute the computation task.

The third party may be, for example, a core network, an OSS, a BSS, or an application. The application herein may be an application other than the network device.

The control plane may be a control plane in the network device, or may be a control plane in another network device. The user plane may be a user plane in the network device, or may be a user plane in another network device.

The computation task in this embodiment of this application may be a task of the control plane, a task of the user plane, or a task of the third party, for example, a task related to an application such as AI, perception, AR, industry control, holographic projection, IoT, self-driving, a robot, a drone, or the tactile internet.

In a possible design, the message of the computation task may be a loading message of the computation task, an update message of the computation task, or a deletion message of the computation task. The computation plane may load the computation task based on the loading message of the computation task. The computation plane may update the computation task based on the update message of the computation task. The computation plane may delete the computation task based on the deletion message of the computation task.

In a possible design, the communication module is further configured to receive a first message from the task source, where the first message is used to request to establish the computation task, and the first message includes one or more of the following: an identifier of the computation task, a type of the computation task, a computing resource required by the computation task, a data source required by the computation task, an execution cycle of the computation task, a security requirement of the computation task, a performance requirement of the computation task, or execution logic of the computation task. The first message may be referred to as a task request message. The computation plane may estimate whether the computation task can be accepted based on the first message. Optionally, if the computation plane determines that the computation task can be accepted, the computation plane may further return an acknowledgment message to the task source.

In a possible design, the communication module is further configured to return an execution result of the computation task to the task source.

In a possible design, the communication module is further configured to send a second message to the control plane, where the second message is used to request to establish a radio bearer between the computation plane and the terminal device.

In a possible design, when the task source is the third party (for example, an application), the communication module is further configured to receive the message of the computation task from the third party (for example, the application) through an integration control unit.

Optionally, the integration control unit is connected to the control plane, the user plane, or the computation plane through a third interface.

In a possible design, the communication module is further configured to send a registration message to the integration control unit, and the integration control unit receives the registration message from the computation plane. The registration message is used to request to register the computation task.

In a possible design, the loading message includes the identifier of the computation task and/or the execution logic of the computation task, and the execution logic includes one or more of the following: a segment of executable code, an executable file, or an image file that can be loaded to a computation container.

In a possible design, the communication module is further configured to receive the update message of the computation task from the task source, and the processing module is further configured to update the computation task based on the update message; and/or the communication module is further configured to receive the deletion message of the computation task from the task source, and the processing module is further configured to delete the computation task based on the deletion message.

According to a fourth aspect, a communication apparatus is provided. The apparatus may be a task source, or may be an apparatus (for example, a chip, a chip system, or a circuit) in a task source. The apparatus has a function of implementing the method performed by the task source according to the first aspect or any possible design of the first aspect. The function may be implemented by hardware, or may be implemented by hardware executing corresponding software. The hardware or the software includes one or more modules corresponding to the foregoing function. The task source includes any one of a control plane, a user plane, or a third party (for example, an application). In a design, the apparatus may include a communication module and a processing module. For example, the communication module is configured to send a message of a computation task to a computation plane.

The third party may be, for example, a core network, an OSS, a BSS, or an application. The application herein may be an application other than the network device.

The control plane may be a control plane in the network device, or may be a control plane in another network device. The user plane may be a user plane in the network device, or may be a user plane in another network device.

The computation task in this embodiment of this application may be a task of the control plane, a task of the user plane, or a task of the third party (the application), for example, a task related to an application such as AI, perception, AR, industry control, holographic projection, IoT, self-driving, a robot, a drone, or the tactile internet.

In a possible design, the message of the computation task may be a loading message of the computation task, an update message of the computation task, or a deletion message of the computation task. The computation plane may load the computation task based on the loading message of the computation task. The computation plane may update the computation task based on the update message of the computation task. The computation plane may delete the computation task based on the deletion message of the computation task.

In a possible design, the communication module is configured to send a first message to the computation plane, where the first message includes one or more of the following: an identifier of the computation task, a type of the computation task, a computing resource required by the computation task, a data source required by the computation task, an execution cycle of the computation task, a security requirement of the computation task, a performance requirement of the computation task, or execution logic of the computation task.

In a possible design, the communication module is further configured to receive an execution result of the computation task from the computation plane.

In a possible design, when the task source is the third party (for example, the application), the third party (for example, the application) may send the message of the computation task to the computation plane through an integration control unit.

Optionally, the integration control unit is connected to the control plane, the user plane, or the computation plane through a third interface.

In a possible design, the loading message includes the identifier of the computation task and/or the execution logic of the computation task, and the execution logic includes one or more of the following: a segment of executable code, an executable file, or an image file that can be loaded to a computation container.

In a possible design, the communication module is further configured to send the update message of the computation task to the computation plane.

In a possible design, the communication module is further configured to send the deletion message of the computation task to the computation plane.

According to a fifth aspect, an embodiment of this application provides a communication apparatus. The apparatus includes a communication interface and a processor. The communication interface is used by the apparatus to communicate with another device. For example, the communication interface may be a transceiver, a circuit, a bus, a module, or an interface of another type. The processor is configured to invoke a group of programs and instructions or data to perform the method performed by the computation plane according to the first aspect or any possible design of the first aspect. The apparatus may further include a memory, configured to store the programs and the instructions or data invoked by the processor. The memory is coupled to the processor. When the processor executes the instructions or data stored in the memory, the method performed by the computation plane according to the first aspect or any possible design of the first aspect may be implemented.

According to a sixth aspect, an embodiment of this application provides a communication apparatus. The apparatus includes a communication interface and a processor. The communication interface is used by the apparatus to communicate with another device. For example, the communication interface may be a transceiver, a circuit, a bus, a module, or an interface of another type. The processor is configured to invoke a group of programs and instructions or data to perform the method performed by the task source according to the first aspect or any possible design of the first aspect. The apparatus may further include a memory, configured to store the programs and the instructions or data invoked by the processor. The memory is coupled to the processor. When the processor executes the instructions or data stored in the memory, the method performed by the task source according to the first aspect or any possible design of the first aspect may be implemented.

According to a seventh aspect, an embodiment of this application further provides a computer-readable storage medium. The computer-readable storage medium stores computer-readable instructions. When the computer-readable instructions are run on a computer, the method according to the first aspect or any possible design of the first aspect is performed.

According to an eighth aspect, an embodiment of this application provides a chip system. The chip system includes a processor, and may further include a memory, configured to implement the method according to the first aspect or any possible design of the first aspect. The chip system may include a chip, or include a chip and another discrete device.

According to a ninth aspect, a computer program product including instructions is provided. When the computer program is run on a computer, the method according to the first aspect or any possible design of the first aspect is performed.

For beneficial effects of the second to the ninth aspects, refer to the descriptions of the first aspect. Details are not described herein again.

### BRIEF DESCRIPTION OF DRAWINGS

FIG. 1 is a schematic diagram of a service data processing protocol procedure according to an embodiment of this application;
FIG. 2a is a first schematic diagram of a wireless network architecture according to an embodiment of this application;
FIG. 2b is a second schematic diagram of a wireless network architecture according to an embodiment of this application;
FIG. 2c is a first schematic diagram of a wireless network networking structure according to an embodiment of this application;
FIG. 2d is a third schematic diagram of a wireless network architecture according to an embodiment of this application;
FIG. 3a is a fourth schematic diagram of a wireless network architecture according to an embodiment of this application;
FIG. 3b is a fifth schematic diagram of a wireless network architecture according to an embodiment of this application;
FIG. 3c is a second schematic diagram of a wireless network networking structure according to an embodiment of this application;
FIG. 4a is a first schematic flowchart of a communication method according to an embodiment of this application;
FIG. 4b is a second schematic flowchart of a communication method according to an embodiment of this application;
FIG. 5 is a schematic flowchart of computation task update according to an embodiment of this application;
FIG. 6 is a schematic flowchart of computation task deletion according to an embodiment of this application;
FIG. 7 is a schematic flowchart of computation task management according to an embodiment of this application;
FIG. 8 is a first schematic diagram of a service data processing procedure according to an embodiment of this application;
FIG. 9 is a second schematic diagram of a service data processing procedure according to an embodiment of this application;
FIG. 10 is a third schematic flowchart of a communication method according to an embodiment of this application;
FIG. 11 is a first schematic diagram of a structure of a communication apparatus according to an embodiment of this application; and
FIG. 12 is a second schematic diagram of a structure of a communication apparatus according to an embodiment of this application.

### DESCRIPTION OF EMBODIMENTS

Embodiments of this application provide a wireless network architecture, a communication method, and a communication apparatus. The method and the apparatus are based on a same inventive concept. Because the method and the apparatus have a similar problem-resolving principle, for implementations of the apparatus and the method, refer to each other, and no repeated description is provided.

In descriptions of embodiments of this application, the term "and/or" describes an association relationship between associated objects and indicates that three relationships may exist. For example, A and/or B may indicate the following three cases: Only A exists, both A and B exist, and only B exists. The character "/" usually indicates an "or" relationship between associated objects. In this application, at least one means one or more, and a plurality of means two or more. In addition, it should be understood that in description of this application, terms such as "first" and "second" are merely used for distinguishing and description, but should not be understood as indicating or implying relative importance, or should not be understood as indicating or implying a sequence.

A technology of deploying a computing resource at a wireless network edge can reduce a processing delay of a computation task to some extent. Mobile edge computing (mobile edge computing, MEC) may be viewed as a cloud server for running a particular task at the wireless network edge. Deploying a computing resource at an area close to a terminal device is aimed at introducing the computing resource to a radio access network. At present, an actual deployment position of the MEC in the wireless network generally corresponds to a local user plane function (user plane function, UPF) network element in a core network. An application of the MEC is to combine an existing core network data local offloading mechanism to lower a processing position of service data from a data network at a source end to a local MEC. An application that is about to process service data should be moved from a physical deployment position to a position close to the core network of the wireless network as close as possible, or even co-located with a local UPF. The MEC technology reduces a processing delay of a computation task to some extent.

However, the MEC deployment has addressed the industry's requirements for instantaneity and data security to some extent, but from the perspective of the logical architecture and data protocol processing procedure of the third-generation partnership project (3rd generation partnership project, 3GPP), it can further be optimized.

An embodiment of this application provides a wireless network architecture. The wireless network architecture is applied to a network device. This is aimed at introducing computing power to a wireless network, or even deploying computing power in the network device. First, concepts or implementations of the computing power and the network device in this embodiment of this application are described first.

The network device provides services for a terminal device 102 within coverage. For example, as shown in FIG. 1, the network device provides services for one or more terminal devices 102 within coverage of the network device.

The network device is a node in a radio access network (radio access network, RAN), and may be referred to as a base station or a RAN node (or device). Currently, some examples of the network device are a next generation NodeB (next generation nodeB, gNB), a next generation evolved NodeB (next generation evolved nodeB, Ng-eNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a base band unit (base band unit, BBU), or a wireless fidelity (wireless fidelity, Wi-Fi) access point (access point, AP). The network device may alternatively be a satellite. The satellite may also be referred to as a high-altitude platform, a high-altitude vehicle, or a satellite base station. The network device may alternatively be another device having a network device function. For example, the network device may alternatively be a device functioning as a network device in device to device (device to device, D2D) communication, internet of vehicles, or machine to machine (machine to machine, M2M) communication. The network device may alternatively be a network device in a possible future communication system.

The computing power may also be referred to as a computing resource, an edge computing resource, a computing power resource, or another name. The computing power may include computing resources, memory resources, or storage resources of various types and forms. A physical device for computing power may be based on a general central processing unit (central processing unit, CPU), for example, an advanced reduced instruction set computer processor (advanced RISC machines, ARM) or X86. The physical device for computing power may alternatively be based on heterogeneous computing power of an artificial intelligence (artificial intelligence, AI) chip, a graphics processing unit (graphics processing unit, GPU) chip, or a field programmable gate array (field programmable gate array, FPGA). Supply of computing power is based on virtual cutting of computing resources in various forms and granularities. For example, the computing power includes a cluster (cluster), a host, a virtual machine (virtual machine, VM), a container (Container), a virtual node (POD), or another finer-grained resource. The resource can run a segment of logic code or function, for example, a cloud-native serverless (serverless) resource. The virtual node may include a group of containers, that is, include one or more containers.

In this embodiment of this application, the computing power is deployed in the wireless network. The wireless network may be a 3GPP network. Further, the computing power may be deployed in an access network in the wireless network. In this embodiment of this application, one or more applications may be deployed on the computing power. The application deployed on the computing power may be an application of any type. Generally, the application deployed on the computing power may have relatively high requirements on aspects such as instantaneity, localization, data security, and data privacy. For example, the application deployed on the computing power may be an artificial intelligence (artificial intelligence, AI) application, a perception application, an augmented reality (augmented reality, AR) application, an industrial control application, a holographic application, an internet of things (internet of things, IoT) application, a self-driving application, a robotic application, an intelligent manufacturing application, a drone application, or a tactile internet application. The perception application may be, for example, an ecological monitoring application or a health monitoring application. The application may be software deployed in the computing power, or may be referred to as application software (application software). A hardware device for running the application software may be, for example, an application server or a chip.

The computing power may complete a computation task by using a computing resource. The computation task is an expression form in which the application on the computing power runs in the computing power.

In this embodiment of this application, the computation task may be briefly referred to as a task. One application may correspond to one or more tasks.

A form of the terminal device in this embodiment of this application is described below.

A terminal, also referred to as user equipment (user equipment, UE), a mobile station (mobile station, MS), a mobile terminal (mobile terminal, MT), or the like, is a device providing voice and/or data connectivity for a user. For example, the terminal includes a handheld device having a wireless connection function, a vehicle-mounted device, or the like. Currently, the terminal may be a mobile phone (mobile phone), a tablet computer, a notebook computer, a palmtop computer, a mobile internet device (mobile internet device, MID), a wearable device (for example, a smart watch, a smart wristband, or a pace counter), a vehicle-mounted device (for example, a car, a bicycle, an electric car, an airplane, a ship, a train, or a high-speed train), a virtual reality (virtual reality, VR) device, an augmented reality (augmented reality, AR) device, a wireless terminal in industrial control (industrial control), a smart home device (for example, a refrigerator, a television, an air conditioner, or a meter), a smart robot, a workshop device, a wireless terminal in self-driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (for example, a smart robot, a hot air balloon, a drone, an airplane), or the like. The terminal may alternatively be another device having a terminal function. For example, the terminal may be a device functioning as a terminal in D2D communication, internet of vehicles, or M2M communication.

The wireless network architecture in this embodiment of this application is described below. The wireless network architecture is applied to a network device. In other words, the wireless network architecture is an architecture of the network device, or the wireless network architecture is an access network architecture. A wireless interface protocol followed by a conventional access network includes a control plane and a user plane. In this embodiment of this application, a computation plane is added to the wireless network architecture. The computation plane can provide a common computation plane service for the control plane and the user plane. The computation plane may be combined with a control plane function and a user plane function to provide customized connection and computation services for the application deployed in the network device.

In this embodiment of this application, the computation plane executes a computation task. The computation task may be a task of the control plane, a task of the user plane, or a task of a third party. The third party may be, for example, a core network, an OSS, a business support system (business support system, BSS), or an application. The application herein may be an application other than the network device.

The computation task may be, for example, a task related to an application such as AI, perception, AR, industrial control, holographic projection, IoT, self-driving, a robot, a drone, or the tactile internet. The computation task may be triggered by the control plane, the user plane, or the third party.

The computation plane may be the computing power described above, and may implement the function of the computing power. An application may be deployed on the computation plane. In other words, a computation task related to an application may be run on the computation plane. For example, a computation task related to an AI application or a computation task related to a perception application is run on the computation plane. A computation task processed by the computation plane may be the computation task of the third party (for example, an application), the task of the control plane, or the task of the user plane.

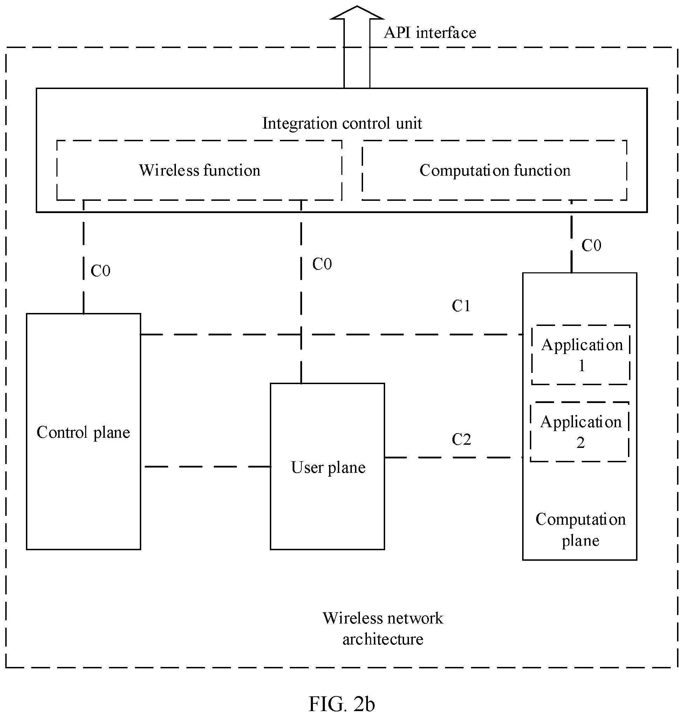

Adding the computation plane to the wireless network architecture may be understood as designing a new logic architecture for the network device. Interfaces between the control plane, the user plane, and the computation plane may be shown in FIG. 2a or FIG. 2b.

As shown in FIG. 2a, a wireless network architecture includes a control plane, a user plane, and a computation plane. An interface between the control plane and the computation plane may be defined as C1. The C1 interface is used for radio bearer management at a dedicated task, user granularity, or session granularity.

An interface between the user plane and the computation plane may be defined as C2. The C2 interface is used for radio bearer mapping or data forwarding at a dedicated task, user granularity, or session granularity.

As shown in FIG. 2b, on the basis of the architecture shown in FIG. 2a, optionally, the wireless network architecture may further include an integration control unit. There is a management interface between the integration control unit and each of the control plane, the user plane, and the computation plane. The interface may be defined as C0. Further, the integration control unit may further include a wireless function and a computation function. There is a management interface between the wireless function and each of the control plane and the user plane, and there is a management interface between the computation function and the computation plane. The integration control unit may be an independent functional entity or network element, or may be a logic function integrated with the network device. A physical device of the integration control unit may be a CPU, an Al chip, a GPU chip, or an FPGA. The integration control unit 104 may be deployed at any other position in an access network, a core network, a wireless network operation support system (operation support system, OSS), or a wireless network. The integration control unit further supports a third-party open interface, for example, an application programming interface (application programming interface, API), so that an application deployer can deploy a specific application on the computation plane through the open interface. The third party may request the computation plane for a computation task by using the integration control unit.

The C0 interface mainly includes an application function (for example, an AI function), an orchestration and a policy of a computing resource, and bearer management related to wireless communication, for example, a configuration or a QoS policy. The C0 interface is further configured to manage a computation task, for example, register a computation task of a user. A source of the computation task may be the control plane or the user plane in the network device, or may be the third party (for example, an application other than the network device).

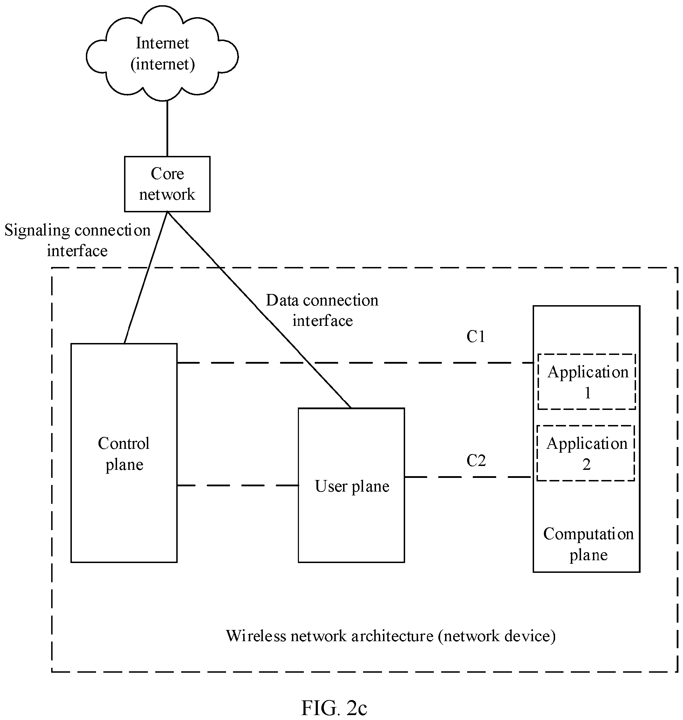

On the basis of FIG. 2a, as shown in FIG. 2c, the following describes a connection relationship between a network device and a core network (core network, CN) from a perspective of end-to-end wireless network networking. An architecture of the network device is a wireless network architecture. Based on this, there is a data connection interface between a user plane and the core network, and there is a signaling connection interface between a control plane and the core network. The network device is connected to an external data network such as the internet through the core network.

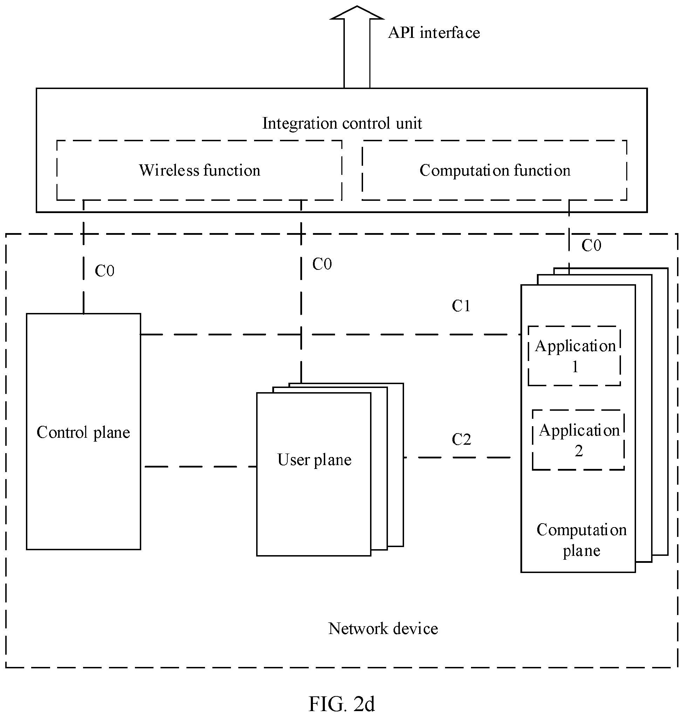

In the example of FIG. 2b, the wireless network architecture may include an integration control unit. In an optional implementation, the integration control unit and the control plane may have a one-to-one correspondence or a one-to-many correspondence, the integration control unit and the user plane may have a one-to-one correspondence or a one-to-many correspondence, and the integration control unit and the computation plane may have a one-to-one correspondence or a one-to-many correspondence. One control plane may correspond to a plurality of user planes and a plurality of computation planes. For example, the control plane is centrally deployed, and the user planes and the computation planes may be deployed in a distributed manner. If the computation plane and the control plane are deployed together, a deployment ratio may be one control plane to one computation plane and one or more user planes. In a radio access network in an area, one integration control unit is generally deployed to correspond to one or more network devices. The network device includes a control plane, a user plane, and a computation plane. FIG. 2d shows an example in which one integration control unit corresponds to a plurality of network devices and one control plane corresponds to a plurality of user planes and a plurality of computation planes.

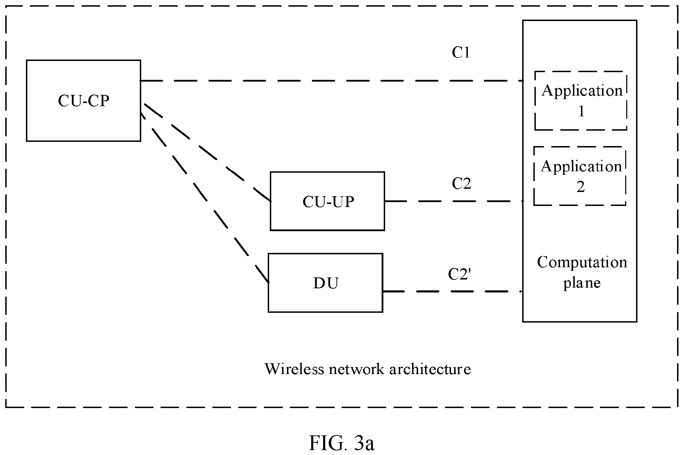

As shown in FIG. 3a, in a fifth generation (5th generation, 5G) new radio (new radio, NR) communication system, an access network supports a central unit (central unit, CU) and a distributed unit (distributed unit, DU). In the CU, a control plane (control plane, CP) and a user plane (user plane, UP) may be separated. For example, in a CP-UP separated architecture, the CU may include a CU-control plane (control plane, CP) and a CU-user plane (user plane, UP). The CU-UP and the CU-CP may be on different physical devices. An open interface usually exists between the CU-CP and the CU-UP, for example, an E1 interface. The CU-CP and the CU-UP each have an interface with the DU. For example, the interface between the CU-CP and the DU is an F1-C interface, and the interface between the CU-UP and the DU is an F1-U interface.

In the CU-DU architecture, when a computation plane is added, the CU-CP, the CU-UP, and the DU each have an interface with the computation plane. For example, the interface between the CU-CP and the computation plane may be defined as C1, the interface between the CU-UP and the computation plane may be defined as C2, and the interface between the DU and the computation plane may be defined as C2'. For definitions of the interfaces C1 and C2, refer to the descriptions in FIG. 2a. The C2' interface is used for radio bearer mapping or data forwarding at a dedicated task, user granularity, or session granularity.

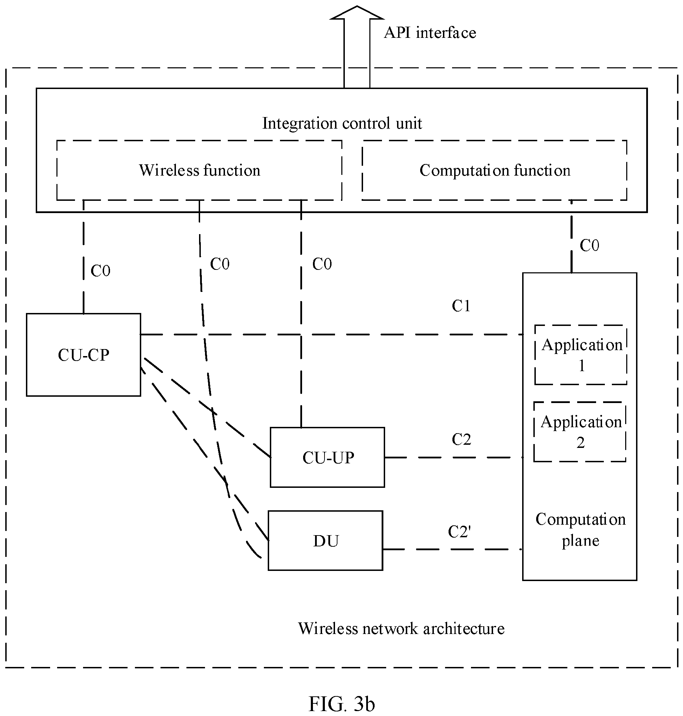

As shown in FIG. 3b, on the basis of the architecture shown in FIG. 3a, optionally, the wireless network architecture may further include an integration control unit. There is a management interface between the integration control unit and each of the CU-CP, the CU-UP, and the DU. The interface may be defined as C0. Further, the integration control unit may further include a wireless function and a computation function. There is a management interface between the wireless function and each of the CU-CP, the CU-UP, and the DU, and there is a management interface between the computation function and the computation plane. The integration control unit may be an independent functional entity or network element, or may be a logic function integrated with the network device. A physical device of the integration control unit may be a CPU, an AI chip, a GPU chip, or an FPGA. The integration control unit 104 may be deployed at any other position in an access network, a core network, an OSS, or a wireless network. The integration control unit further supports a third-party open interface, for example, an API, so that an application deployer can deploy a specific application on the computation plane through the open interface.

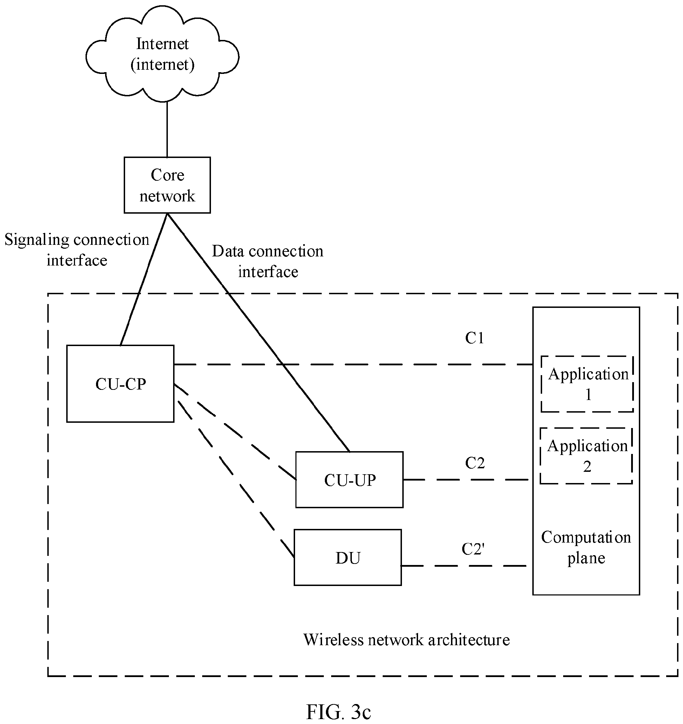

On the basis of FIG. 3a, as shown in FIG. 3c, the following describes a connection relationship between a network device and a core network (core network, CN) from a perspective of end-to-end wireless network networking. An architecture of the network device is a wireless network architecture. Based on this, there is a data connection interface between the CU-UP and the core network, and there is a signaling connection interface between the CU-CP and the core network. The network device is connected to an external data network such as the internet through the core network.

For a definition of the C0 interface, refer to the description in FIG. 3a.

It can be understood that in this embodiment of this application, a name of an interface between the computation plane and another plane is merely an example, and another name may be used.

One or more applications may be deployed on the computation plane. In the descriptions of the wireless network architecture in FIG. 2a, FIG. 2b, FIG. 2c, FIG. 2d, FIG. 3a, FIG. 3b, and FIG. 3c, an example in which an application 1 and an application 2 are deployed on the computation plane is used, that is, the computation plane can run computation tasks of categories of the application 1 and the application 2. During actual application, more or fewer applications may be deployed on the computation plane. For an example of the application that can be deployed on the computation plane, refer to the example of the application deployed in the computing power.

In the example of FIG. 3b, the wireless network architecture may include an integration control unit. In an optional implementation, in a 5G architecture, the integration control unit and the CU-CP may have a one-to-one correspondence or a one-to-many correspondence, the integration control unit and the CU-UP may have a one-to-one correspondence or a one-to-many correspondence, and the integration control unit and the DU may have a one-to-one correspondence or a one-to-many correspondence.

In this embodiment of this application, the control plane is mainly responsible for radio resource management, for example, quality of service (quality of service, QoS), mobility, and connection management; and may further be responsible for radio resource control (radio resource control, RRC) signaling processing. In 5G, the control plane is mainly a control function in the CU-CP and the DU. The user plane accepts an indication from the control plane, and is responsible for network device data scheduling and processing. In 5G, the user plane is mainly a user function in the CU-DP and the DU. The computation plane may provide an application service for the control plane, the user plane, or the third party, for example, provide an AI application or another extension capability such as a perception capability. The integration control unit is mainly responsible for the application of the computation plane and wireless smart control and orchestration. An open north API interface is configured to accept a service request.

In this embodiment of this application, the computation plane may serve as a logic function, and may serve as a part of function of the network device during system deployment. The computation plane may be physically integrated or may be added to the network device as an add-on (add-on), and the network device becomes a new network device having a computation plane capability. The computation plane is deployed in the wireless network architecture. For example, the network device may include the computation plane, or the computation plane may be connected to the network device, through, for example, a bus or an interface. When the network device includes the computation plane, the computation plane may process a computation task through a processor in the network device. When the computation plane is connected to the network device, the computation plane may execute the computation task through an extra processor.

The following describes the communication method provided in embodiments of this application. The method may be applied to the wireless network architecture provided in embodiments of this application. In other words, the method may be applied to a network device, and the network device conforms to the wireless network architecture provided in embodiments of this application.

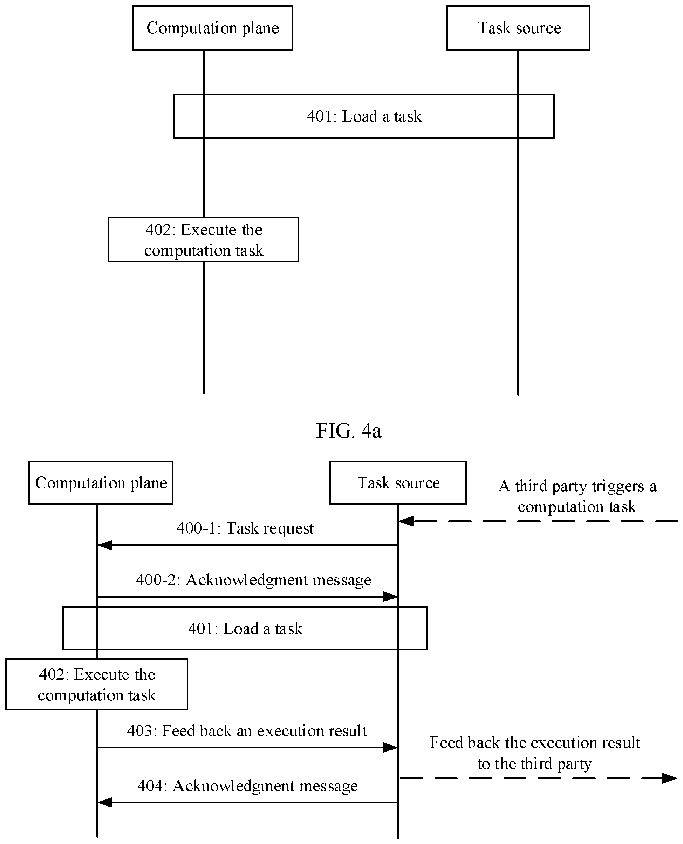

As shown in FIG. 4a, a specific procedure of the computation task processing method provided in embodiments of this application is as follows. The network device includes a computation plane. The computation plane is connected to a control plane through a first interface. For example, the first interface may be the C1 interface in the foregoing description. The computation plane is connected to a user plane through a second interface. For example, the second interface is the C2 interface in the foregoing description. In a 5G architecture, the second interface may be a C2 interface or a C2' interface.

The control plane and the computation plane may be located in a same network device or different network devices. The user plane and the computation plane may also be located in a same network device or different network devices. Different network devices may be connected through an interface, for example, an Xn interface. An integration control unit may have a resource scheduling capability of the computation plane, can control information about all computation planes within its coverage, and can schedule a proper computation plane for a computation task. In a computation plane resource shared scenario, the integration control unit can schedule a computation plane resource of a network device to process a computation task of another network device.

S401: A task source sends a message of a computation task to the computation plane, and the computation plane receives the message of the computation task from the task source.

The task source refers to a device triggering the computation task of the computation plane. For example, the task source may be the control plane or the user plane. If the control plane or the user plane and the computation plane are located in a same network device, internal logic of the control plane or the user plane generally triggers the computation task.

The task source may alternatively be a third party. When the task source is the third party, the third party sends the message of the computation task to the computation plane through the integration control unit. Therefore, from this perspective, the task source may alternatively be considered as the integration control unit. The third party may be, for example, a core network, an OSS, a BSS, or an application. The application herein may be an application other than the network device. There is a C0 interface between the integration control unit and the computation plane. The computation plane receives a computation task loading message from the integration control unit. When the third party sends the message of the computation task through the integration control unit, the third party may be considered as the task source. However, from the perspective of direct interaction of the computation plane, the task source may be considered as the integration control unit.

If the task source is the control plane, the control plane sends the message of the computation task of the control plane to the computation plane, and the computation plane receives the message of the computation task from the control plane.

If the task source is the user plane, the user plane sends the message of the computation task of the user plane to the computation plane, and the computation plane receives the message of the computation task from the user plane.

If the task source is the third party, the third party sends the message of the computation task of the third party to the computation plane, and the computation plane receives the message of the computation task from the third party.

When the third party sends the message of the computation task through the integration control unit, the third party may send the message of the computation task to the integration control unit, and then the integration control unit sends the message of the computation task to the computation plane.

When the task source is the control plane, the control plane sends a task request to the computation plane through the first interface. When the task source is the user plane, the user plane sends a task request to the computation plane through the second interface.

The message of the computation task may include a task identifier. Loading the computation task includes loading main execution logic of the task, and a form may be a segment of executable code, an executable file, an image file that can be loaded to a computation container, or any other information that is supported by the computation plane and that can be executed as a task.

S402: The computation plane executes the computation task.

After receiving the message of the computation task, the computation plane prepares an execution environment for the computation task, and actually performs the computation task.

Optionally, after executing the computation task, the computation plane may return an execution result of the computation task to the task source.

On the basis of the embodiment shown in FIG. 4a, as shown in FIG. 4b, the following provides some optional implementations.

Optionally, before S401, the method further includes S400-1 and S400-2.

S400-1: The task source sends a task request to the computation plane, and the computation plane receives the task request from the task source.

The task request may also be referred to as a task request message. The task request may include a task identifier. The task request may further include other task information such as a task type. For example, the task type may be an AI application task or a perception application task. The task request may further include a computing resource required by the task. The task request may further include other configuration information of the task. The other configuration information of the task includes one or more of the following limitations and descriptions of the task: a data source required by the task, an execution cycle, a security requirement, a performance requirement, or execution logic.

After S400-1, the method further includes S400-2.

S400-2: The computation plane returns an acknowledgment message to the task source, and the task source receives the acknowledgment message from the computation plane.

The computation plane may return the acknowledgment message after confirming, through evaluation, that the task request can be accepted.

Optionally, after S402, the method may further include S403.

S403: The computation plane sends the execution result of the computation task to the task source. The task source receives the execution result of the computation task from the computation plane.

When the third party sends the message of the computation task through the integration control unit, the integration control unit may further send the execution result of the computation task to the third party.

The execution result may carry the task identifier.

After S403, the method may further include S404.

S404: The task source sends an acknowledgment message to the computation plane, and the computation plane receives the acknowledgment message from the task source.

The acknowledgment message is used to indicate that the execution result is received. Optionally, the acknowledgment message may further carry indication information. For example, the indication information indicates an operation such as deletion, update, or re-execution of the task.

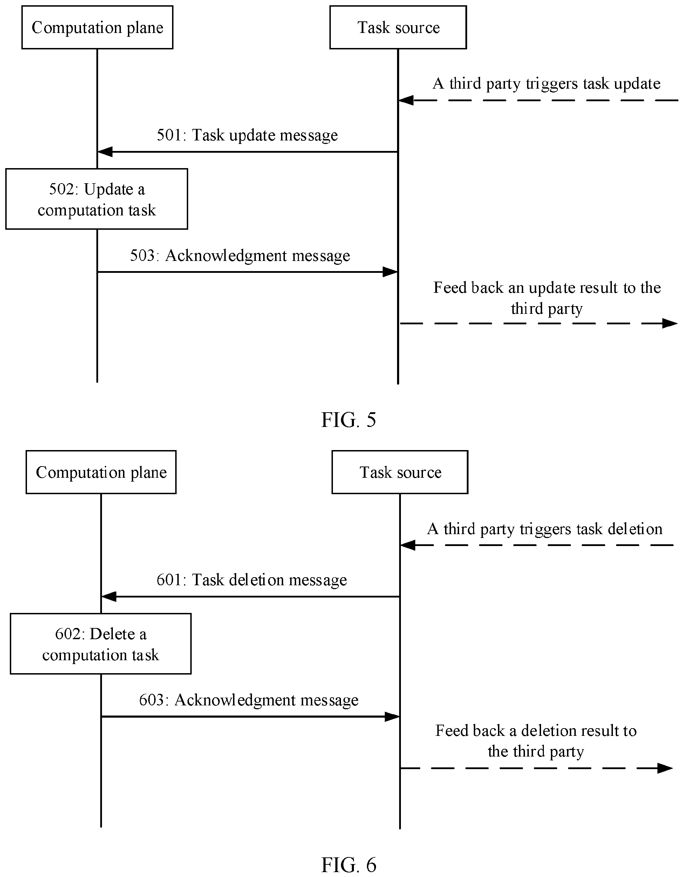

The following describes other processing procedures of the computation task by using FIG. 5 and FIG. 6. The embodiments of FIG. 5 and FIG. 6 may be performed on the basis of the embodiment of FIG. 4a or FIG. 4b, or may be performed independently. When the embodiments of FIG. 5 and FIG. 6 are performed on the basis of the embodiment of FIG. 4a or FIG. 4b, if it is assumed that the computation task performed in the embodiment of FIG. 4a or FIG. 4b is loading a computation task, the task loaded in the embodiment of FIG. 4a or FIG. 4b may continue to be processed.

The embodiment of FIG. 5 is a procedure of updating the computation task.

S501: The task source sends a task update message to the computation plane, and the computation plane receives the task update message from the task source.

The task update message may include a task identifier. The task update message may further include task update information. The task update information indicates to-be-updated information of the computation task.

When the embodiments of FIG. 5 and FIG. 6 are performed on the basis of the embodiment of FIG. 4b, S501 may be omitted, and the to-be-updated information of the task is indicated by using the acknowledgment message in S404.

S502: The computation plane updates the computation task based on the task update message.

The computation plane may determine a to-be-updated computation task based on the task identifier, and updates the computation task based on the task update information.

S503: The computation plane sends an acknowledgment message to the task source, and the task source receives the acknowledgment message from the computation plane.

The acknowledgment message may be used to indicate that the computation task has been updated.

Similar to the idea of the embodiment of FIG. 4a or FIG. 4b, in the embodiment of FIG. 5, the third party may trigger update of the computation task through the integration control unit. In this case, the integration control unit may further send an update result of the computation task to the third party.

The embodiment of FIG. 6 is a procedure of deleting the computation task.

S601: The task source sends a task deletion message to the computation plane, and the computation plane receives the task deletion message from the task source.

The task deletion message may include a task identifier.

When the embodiments of FIG. 5 and FIG. 6 are performed on the basis of the embodiment of FIG. 4a or FIG. 4b, S601 may be omitted, and information indicating that the task is to be deleted is indicated by using the acknowledgment message in S404.

S602: The computation plane deletes the computation task based on the task deletion message.

The computation plane may determine a to-be-deleted computation task based on the task identifier, and delete the computation task.

S603: The computation plane sends an acknowledgment message to the task source, and the task source receives the acknowledgment message from the computation plane.

The acknowledgment message may be used to indicate that the computation task has been deleted.

Similar to the idea of the embodiment of FIG. 4a or FIG. 4b, in the embodiment of FIG. 6, the third party may trigger deletion of the computation task through the integration control unit. In this case, the integration control unit may further send a deletion result of the computation task to the third party.

It can be understood that in this embodiment of this application, other processing may further be performed on the computation task. For a method of the other processing, refer to the processing procedure in the embodiment of FIG. 4a, FIG. 4b, FIG. 5, or FIG. 6.

In conclusion, by deploying the computation plane in the wireless network, loading, deletion, update, or other processing of the computation task may be performed by the computation plane to reduce a processing delay of the computation task.

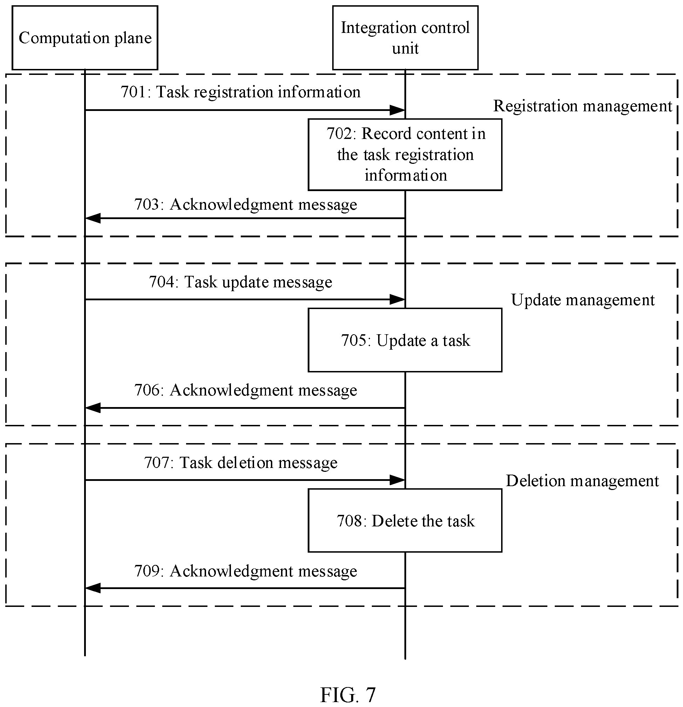

As explained in the description of the function of the C0 interface, the integration control unit can manage the computation task through the C0 interface. The following describes, by using FIG. 7, how the integration control unit manages the computation task. With reference to the embodiments of FIG. 4a, FIG. 4b, FIG. 5, and FIG. 6, management performed by the integration control unit on the computation task may be described when the computation plane records, deletes, and updates the computation task.

S701: A computation plane sends task registration information to an integration control unit, and the integration control unit receives the task registration information from the computation plane.

The task registration information may carry a task identifier, and may further carry other task description information.

S702: After receiving the task registration information, the integration control unit may record content carried in the task registration information.

S703: The integration control unit returns an acknowledgment message to the computation plane, and the computation plane receives the acknowledgment message from the integration control unit.

When the computation plane has completed loading of the computation task through S701, S702, and S703, the computation task is managed.

S704: The computation plane sends a task update message to the integration control unit, and the integration control unit receives the task update message from the computation plane.

The task update message may carry a task identifier, and may further carry task update content.

S705: After receiving the task update message, the integration control unit updates the recorded content of the computation task.

The integration control unit may determine a to-be-updated task among registered tasks based on the task identifier. The recorded content of the computation task is updated based on task update content carried in the task update message.

S706: The integration control unit returns an acknowledgment message to the computation plane, and the computation plane receives the acknowledgment message from the integration control unit.

When the computation plane has completed update of the computation task through S704, S705, and S706, the integration control unit manages the computation task.

S707: The computation plane sends a task deletion message to the integration control unit, and the integration control unit receives the task deletion message from the computation plane.

The task deletion message may carry a task identifier.

S708: After receiving the task deletion message, the integration control unit deletes the computation task.

The integration control unit may determine a to-be-deleted task among the registered tasks based on the task identifier, and delete the registered computation task.

S709: The integration control unit returns an acknowledgment message to the computation plane, and the computation plane receives the acknowledgment message from the integration control unit.

When the computation plane has completed deletion of the computation task through S707, S708, and S709, the integration control unit manages the computation task.

It can be understood that registration management, update management, and deletion management that are performed by the integration control unit on the computation task may be independent of each other, and do not need to exist together. The task management indicated by three dashed boxes in FIG. 7 is parallel solutions, which do not need to be performed together. The sequence numbers of steps in FIG. 7 cannot limit an execution order of the three parallel solutions.

On the basis of the foregoing description, the following further describes, with reference to specific application scenarios, the communication method provided in embodiments of this application. A processing procedure of service data can be implemented on the basis of the wireless network architecture provided in embodiments of this application.

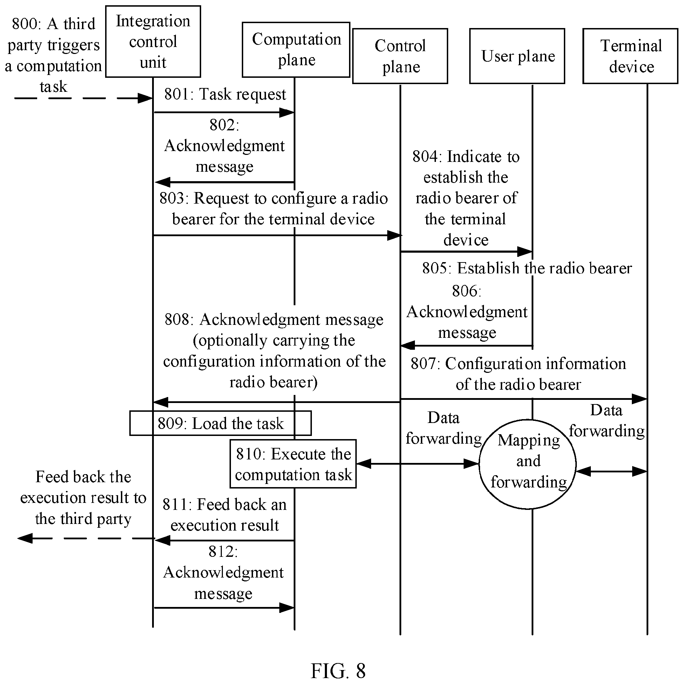

As shown in FIG. 8, the method is related to a terminal device, a control plane, a user plane, a computation plane, and an integration control unit.

S801: The integration control unit sends a task request to the computation plane, and the computation plane receives the task request from the integration control unit.

This step may be equivalent to S400-1, in which the task source is the integration control unit. For content carried in the task request, refer to the description in S400-1.

Certainly, a third party may trigger the task request through the integration control unit. In this case, the method may further include S800.

S800: The third party sends the task request to the integration control unit, and the integration control unit receives the task request from the third party.

S802: The computation plane returns an acknowledgment message to the integration control unit, and the integration control unit receives the acknowledgment message from the computation plane.

The computation plane may return the acknowledgment message after confirming, through evaluation, that the task request can be accepted.

S803: The integration control unit sends a request message to the control plane, and the control plane receives the request message from the integration control unit.

The request message is used to request to configure a radio bearer for the terminal device. The radio bearer is configured to transmit service data of the computation task.

Optionally, the integration control unit needs to obtain data from one or more terminal devices based on a configuration in the task request from the third party, and sends a request message to the control plane. The request message is used to establish a wireless connection between the terminal devices.

S804: After receiving the request message, the control plane sends indication information to the user plane, and the user plane receives the indication information from the control plane.

The indication information is used to indicate the user plane to establish the radio bearer of the terminal device. The radio bearer may be mapped to the computation task. To be specific, data in the established radio bearer and data of the task deployed in the computation plane can be transmitted.

S805: The user plane establishes the radio bearer based on the indication information from the control plane.

The user plane may further establish a mapping relationship or association between the radio bearer and the computation task. The mapping relationship or association may support service data in the radio bearer in arriving at the computation task deployed in the computation plane, or the data of the computation task arrives at the terminal device through the radio bearer.

S806: The user plane sends a radio bearer establishment acknowledgment message to the control plane, and the control plane receives the acknowledgment message from the user plane.

The acknowledgment message may carry configuration information of the established radio bearer.

S807: The control plane sends the configuration information of the radio bearer to the terminal device, and the terminal device receives the configuration information of the radio bearer from the control plane.

S808: The control plane sends an acknowledgment message to the integration control unit, and the integration control unit receives the acknowledgment message from the control plane, where the acknowledgment message may carry the configuration information of the radio bearer.

S809: The integration control unit loads a computation task to the computation plane for an application, and the computation plane receives the loading message of the computation task for the application from the task source.

This step may be equivalent to S401, in which the task source is the integration control unit.

The integration control unit loads a specific computation task to the computation plane, the computation task includes main execution logic of the computation task, and a form may be a segment of executable code, an executable file, an image file that can be loaded to a computation container, or any other information that is supported by the computation plane and that can be executed as a task.

S810: The computation plane executes the computation task.

This step may be equivalent to S402, in which the task source is the integration control unit or the third party.

The computation plane prepares an execution environment for the computation task, and actually performs the computation task.

The computation task in the computation plane exchanges data with the terminal device based on the radio bearer. Data generated by the computation task is sent to the terminal device through the radio bearer. Data generated by the terminal device is sent to the computation task through the radio bearer. The computation plane executes the computation task based on the data from the terminal device.

S811: The computation plane sends an execution result of the computation task to the integration control unit. The integration control unit receives the execution result of the computation task from the computation plane.

This step may be equivalent to S403, in which the task source is the integration control unit.

The integration control unit may further send the execution result of the computation task to the third party.

S812: The integration control unit sends acknowledgment information to the computation plane, and the computation plane receives the acknowledgment message from the integration control unit.

This step may be equivalent to S404, in which the task source is the integration control unit.

The acknowledgment message is used to indicate that the execution result is received. Optionally, the acknowledgment message may further carry indication information. For example, the indication information indicates an operation such as deletion, update, or re-execution of the task.

The embodiment of FIG. 8 may be based on the embodiment of FIG. 4a or FIG. 4b. On the basis of some equivalent steps, another step in the embodiment of FIG. 8 is an optional step, and is an extension of an optional implementation of the embodiment of FIG. 4a or FIG. 4b.

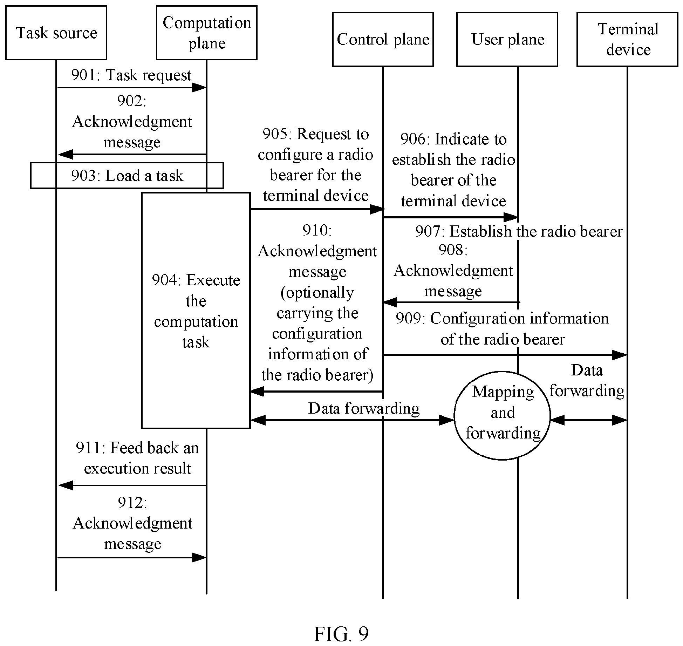

As shown in FIG. 9, the method is related to a terminal device, a control plane, a user plane, a computation plane, and a task source.

S901: The task source sends a task request to the computation plane, and the computation plane receives the task request from the task source.

This step may be equivalent to S400-1.

S902: The computation plane returns an acknowledgment message to the task source, and the task source receives the acknowledgment message from the computation plane.

The computation plane may return the acknowledgment message after confirming, through evaluation, that the task request can be accepted.

S903: The task source loads a computation task to the computation plane for an application, and the computation plane receives the loading message of the computation task for the application from the task source.

This step may be equivalent to S401.

S904: The computation plane executes the computation task. This step may be implemented through S905 to S910.

This step may be equivalent to S402.

S905: The computation plane sends a request message to the control plane, and the control plane receives the request message from the computation plane.

The request message is used to request to configure a radio bearer for the terminal device. The radio bearer is configured to transmit service data of the computation task.

S906: After receiving the request message, the control plane sends indication information to the user plane, and the user plane receives the indication information from the control plane.

The indication information is used to indicate the user plane to establish the radio bearer of the terminal device. The radio bearer may be mapped to the computation task. To be specific, data in the established radio bearer and data of the task deployed in the computation plane can be transmitted.

S907: The user plane establishes the radio bearer based on the indication information from the control plane.

The user plane may further establish a mapping relationship or association between the radio bearer and the computation task. The mapping relationship or association may support service data in the radio bearer in arriving at the computation task deployed in the computation plane, or the data of the computation task arrives at the terminal device through the radio bearer.

S908: The user plane sends a radio bearer establishment acknowledgment message to the control plane, and the control plane receives the acknowledgment message from the user plane.

The acknowledgment message may carry configuration information of the established radio bearer.

S909: The control plane sends the configuration information of the radio bearer to the terminal device, and the terminal device receives the configuration information of the radio bearer from the control plane.

S910: The control plane sends an acknowledgment message to the computation plane, and the computation plane receives the acknowledgment message from the control plane, where the acknowledgment message may carry the configuration information of the radio bearer.

The computation task in the computation plane exchanges data with the terminal device based on the radio bearer. Data generated by the computation task is sent to the terminal device through the radio bearer. Data generated by the terminal device is sent to the computation task through the radio bearer. The computation plane executes the computation task based on the data from the terminal device.

S911: The computation plane sends the execution result of the computation task to the task source. The task source receives the execution result of the computation task from the computation plane.

This step may be equivalent to S403, in which the task source is the task source.

S912: The task source sends acknowledgment information to the computation plane, and the computation plane receives the acknowledgment message from the task source.

This step may be equivalent to S404, in which the task source is the task source.

The acknowledgment message is used to indicate that the execution result is received. Optionally, the acknowledgment message may further carry indication information. For example, the indication information indicates an operation such as deletion, update, or re-execution of the task.

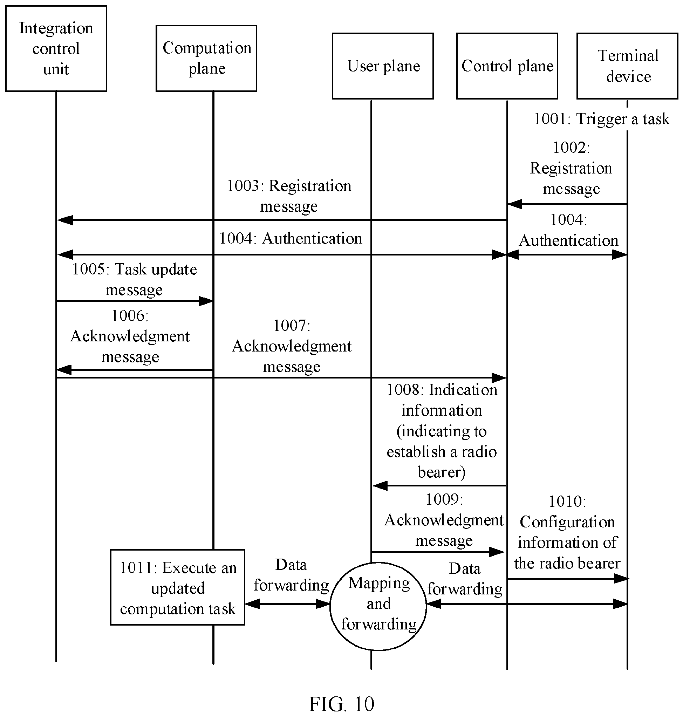

After the computation task is created, the terminal device may exchange service data with the computation task through the radio bearer. The following further describes in detail, with reference to FIG. 10, the communication method provided in embodiments of this application. Data exchange between the terminal device and the computation task can be implemented.

S1001: A terminal device triggers computation (or a task) for an application.

The terminal device triggers a task of an application. For example, an application deploys a computation task on a computation plane through an integration control unit. When a terminal related to the application needs to participate in the computation task, an application client running on the terminal triggers a registration procedure of the terminal device.

S1002: The terminal device sends a registration message to the control plane, and the control plane receives the registration message from the terminal device.

The registration message may carry a to-be-registered task identifier (ID). The task ID is transmitted by the application to the application client on the terminal device in a manner of using an application layer on the application client. The application is a creation source of the task. After applying for creating a computation task to the integration control unit, the application obtains the task ID from the integration control unit.

S1003: The control plane sends the registration message to the integration control unit, and the integration control unit receives the registration message from the control plane.

The control plane may forward the registration message from the terminal device to the integration control unit.

S1004: The integration control unit authenticates the terminal device.

The integration control unit finds a corresponding task based on the task ID in the registration message. The integration control unit authenticates the terminal device based on a configuration of the task.

An authentication method may be configured based on the task, may be defined in a standard, or may be negotiated between the integration control unit and the terminal device through the control plane.

An authentication solution may use an existing EAP-AKA procedure. Generally, a two-way authentication process can be used. To be specific, the computation task authenticates the terminal device, and the terminal device also authenticates the computation task.

S1005: The integration control unit sends a task update message to the computation plane, and the computation plane receives the task update message from the integration control unit.

This step may correspond to S501.

The task update message is used to notify the computation plane that a new terminal device registers with the computation task.

The computation plane updates the computation task based on the task update message. Refer to S502.

S1006: The computation plane sends an acknowledgment message to the integration control unit, and the integration control unit receives the acknowledgment message from the computation plane.

The acknowledgment message may be used to indicate that the computation task has been updated.

This step may correspond to S503.

S1007: The integration control unit sends an acknowledgment message to the control plane, and the control plane receives the acknowledgment message from the integration control unit.

After receiving the acknowledgment message from the integration control unit, the control plane determines whether a corresponding terminal device has a configured radio bearer for use; and if yes, uses the configured radio bearer to transmit data of the computation task; or if not, performs S1008.

S1008: The control plane sends indication information to the user plane, and the user plane receives the indication information from the control plane.

The indication information is used to indicate the user plane to establish the radio bearer of the terminal device. The radio bearer may be mapped to the computation task. To be specific, data in the established radio bearer and data of the task deployed in the computation plane can be transmitted.

S 1009: The user plane sends a radio bearer establishment acknowledgment message to the control plane, and the control plane receives the acknowledgment message from the user plane.

The acknowledgment message may carry configuration information of the established radio bearer.

S1010: The control plane sends the configuration information of the radio bearer to the terminal device, and the terminal device receives the configuration information of the radio bearer from the control plane.

S1011: The computation plane executes an updated computation task.

The computation task in the computation plane exchanges data with the terminal device based on the radio bearer. Data generated by the computation task is sent to the terminal device through the radio bearer. Data generated by the terminal device is sent to the computation task through the radio bearer. The computation plane executes the computation task based on the data from the terminal device.

To implement the functions in the method provided in the foregoing embodiment of this application, the computation plane in embodiments of this application may include a hardware structure and/or a software module. The foregoing functions are implemented in a form of a hardware structure, a software module, or a hardware structure plus a software module. Whether one of the foregoing functions is performed in the manner of a hardware structure, a software module, or a hardware structure and a software module depends on a specific application and design constraints of the technical solutions.

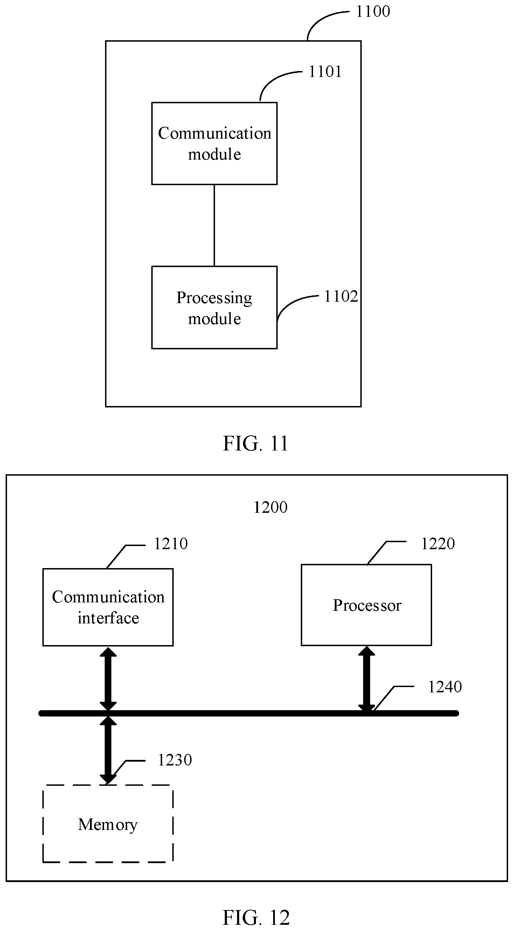

As shown in FIG. 11, based on a same technical concept, an embodiment of this application further provides a communication apparatus 1100. The communication apparatus 1100 may be a computation plane, an apparatus in a computation plane, or an apparatus that can be used with a computation plane. In a design, the communication apparatus 1100 may include modules for performing the methods/operations/steps/actions performed by the computation plane in the foregoing method embodiments. The modules may be hardware circuits, may be software, or may be implemented by hardware circuits in combination with software. In a design, the communication apparatus 1100 may include a communication module 1101 and a processing module 1102.

The communication module 1101 is configured to receive a message of a computation task from a task source.

The processing module 1102 is configured to execute the computation task.

The communication module 1101 and the processing module 1102 are further configured to perform other operations performed by the computation plane in the foregoing method embodiments. Details are not described herein again.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

FIG. 12 shows a communication apparatus 1200 according to an embodiment of this application. The apparatus 1200 is configured to implement a function of the computation plane or the task source in the foregoing methods. The apparatus may be the computation plane, an apparatus in the computation plane or the task source, or an apparatus that can be used with the computation plane or the task source. The apparatus may be a chip system. In this embodiment of this application, the chip system may include a chip, or may include the chip and another discrete component. The communication apparatus 1200 includes at least one processor 1220, configured to implement a function of the computation plane or the task source in the methods provided in embodiments of this application. The communication apparatus 1200 may further include a communication interface 1210. In this embodiment of this application, the communication interface may be a receiver, a circuit, a bus, a module, or an interface of another type, and is configured to communicate with another device through a transmission medium. For example, the communication interface 1210 is used by an apparatus in the communication apparatus 1200 to communicate with the another device. The processor 1220 receives and sends information through the communication interface 1210, and is configured to implement the method implemented by the computation plane or the task source in the foregoing method embodiments.

For example, when the apparatus in the communication apparatus 1200 is configured to implement the method performed by the computation plane:
the communication interface 1210 is configured to receive a loading message of a computation task from the task source. The processor 1220 is configured to execute the computation task.

For example, when the apparatus in the communication apparatus 1200 is configured to perform the method performed by the task source, the communication interface 1210 is configured to send the loading message of the computation task to the computation plane.

The processor 1220 and the communication interface 1210 may further be configured to perform another corresponding step or operation performed by the computation plane or the task source in the foregoing method embodiments. Details are not described herein again.

The communication apparatus 1200 may further include at least one memory 1230, configured to store program instructions and/or data. The memory 1230 is coupled to the processor 1220. The coupling in this embodiment of this application is indirect coupling or a communication connection between apparatuses, units, or modules for information exchange between the apparatuses, the units, or the modules, and may be in electrical, mechanical, or other forms. The processor 1220 may cooperate with the memory 1230. The processor 1220 may execute the program instructions stored in the memory 1230. At least one of the at least one memory may be integrated with the processor.

A specific connection medium between the communication interface 1210, the processor 1220, and the memory 1230 is not limited in this embodiment of this application. In this embodiment of this application, the memory 1230, the processor 1220, and the communication interface 1210 are connected by using a bus 1240 in FIG. 12. The bus is indicated by using a bold line in FIG. 12. A connection manner between other components is merely an example for description, and is not limited by reference. The bus may be classified into an address bus, a data bus, a control bus, and the like. For ease of representation, only one bold line is used for representation in FIG. 12, but this does not mean that there is only one bus or only one type of bus.

When the communication apparatus 1100 and the communication apparatus 1200 are specifically chips or chip systems, the communication module 1101 and the communication interface 1210 may output or receive a baseband signal. The baseband signal may be, for example, the message of the computation task, the task request, the acknowledgment message, the execution result of the computation task, the task update message, the task deletion message, the task registration information, the registration message, or the like in the foregoing embodiments. In embodiments of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, or may be any conventional processor or the like. The steps of the method disclosed with reference to embodiments of this application may be directly performed by a hardware processor, or may be performed by a combination of hardware and software modules in the processor.

In this embodiment of this application, the memory 1230 may be a non-volatile memory, for example, a hard disk drive (hard disk drive, HDD) or a solid-state drive (solid-state drive, SSD); or may be a volatile memory (volatile memory), for example, a random-access memory (random-access memory, RAM). The memory is any other medium that can carry or store expected program code in a form of an instruction structure or a data structure and that can be accessed by a computer, but is not limited thereto. The memory in this embodiment of this application may alternatively be a circuit or any other apparatus that can implement a storage function, and is configured to store program instructions and/or data.

Some or all operations or functions performed by the computation plane in the foregoing method embodiments may be completed by using a chip or an integrated circuit.

To implement a function of the communication apparatus described in FIG. 11 or FIG. 12, an embodiment of this application provides a chip, including a processor, configured to support the communication apparatus in implementing a function related to the computation plane in the foregoing method embodiments. In a possible design, the chip is connected to a memory, or the chip includes a memory. The memory is configured to store necessary program instructions and data of the communication apparatus.

An embodiment of this application provides a computer-readable storage medium, storing a computer program. The computer program includes instructions used to perform the foregoing method embodiments.

An embodiment of this application provides a computer program product including instructions. When computer program product runs on a computer, the foregoing method embodiments are performed.

Persons skilled in the art should understand thatembodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according toembodiments of this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

Although some embodiments of this application have been described, persons skilled in the art can make changes and modifications to these embodiments once they learn the basic inventive concept. Therefore, the following claims are intended to be construed as to cover the embodiments and all changes and modifications falling within the scope of this application.

Clearly, persons skilled in the art can make various modifications and variations to embodiments of this application without departing from the spirit and scope of embodiments of this application. In this case, this application is intended to cover these modifications and variations provided that they fall within the scope of protection defined by the following claims and their equivalent technologies.

## Claims

1. A computation task processing method, applied to a computation plane in a network device, wherein the method comprises:
receiving, by the computation plane, a message of a computation task from a task source, wherein the task source comprises any one of a control plane, a user plane, or an application, the computation plane is connected to the control plane through a first interface, and the computation plane is connected to the user plane through a second interface; and
executing, by the computation plane, the computation task.

2. The method according to claim 1, wherein the method further comprises:
receiving, by the computation plane, a first message from the task source, wherein the first message is used to request to establish a computation task, and the first message comprises one or more of the following: an identifier of the computation task, a type of the computation task, a computing resource required by the computation task, a data source required by the computation task, an execution cycle of the computation task, a security requirement of the computation task, a performance requirement of the computation task, or execution logic of the computation task.

3. The method according to claim 1 or 2, wherein the method further comprises:
returning, by the computation plane, an execution result of the computation task to the task source.

4. The method according to any one of claims 1 to 3, further comprising:
sending, by the computation plane, a second message to the control plane, wherein the second message is used to establish a radio bearer between the computation plane and a terminal device.

5. The method according to any one of claims 1 to 4, wherein the receiving, by the computation plane, a message of a computation task from a task source comprises: receiving, by the computation plane, the message of the computation task from the application through an integration control unit.

6. The method according to claim 5, wherein the integration control unit is connected to the control plane, the user plane, or the computation plane through a third interface.

7. The method according to claim 6, wherein the method further comprises:
sending, by the computation plane, a registration message to the integration control unit, wherein the registration message is used to request to register the computation task.

8. The method according to any one of claims 1 to 7, wherein the loading message comprises the identifier of the computation task and/or the execution logic of the computation task, and the execution logic comprises one or more of the following: a segment of executable code, an executable file, or an image file that can be loaded to a computation container.

9. The method according to any one of claims 1 to 8, wherein the message of the computation task comprises:
the loading message of the computation task, an update message of the computation task, or a deletion message of the computation task.

10. A communication apparatus, wherein the apparatus is applied to a computation plane in a network device, the computation plane is connected to a control plane through a first interface, the computation plane is connected to a user plane through a second interface, and the apparatus comprises:
a communication module, configured to receive a message of a computation task from a task source, wherein the task source comprises any one of the control plane, the user plane, or an application; and
a processing module, configured to execute the computation task.

11. The apparatus according to claim 10, wherein the communication module is further configured to:
receive a first message from the task source, wherein the first message is used to request to establish the computation task, and the first message comprises one or more of the following: an identifier of the computation task, a type of the computation task, a computing resource required by the computation task, a data source required by the computation task, an execution cycle of the computation task, a security requirement of the computation task, a performance requirement of the computation task, or execution logic of the computation task.

12. The apparatus according to claim 10 or 11, wherein the communication module is further configured to:
return an execution result of the computation task to the task source.

13. The apparatus according to any one of claims 10 to 12, wherein the communication module is further configured to:
send a second message to the control plane, wherein the second message is used to request to establish a radio bearer between the computation plane and a terminal device.

14. The apparatus according to any one of claims 10 to 13, wherein the communication module is configured to receive the message of the computation task from the application through an integration control unit.

15. The apparatus according to claim 14, wherein the integration control unit is connected to the control plane, the user plane, or the computation plane through a third interface.

16. The apparatus according to claim 15, wherein the communication module is further configured to send a registration message to the integration control unit, wherein the registration message is used to request to register the computation task.

17. The apparatus according to any one of claims 10 to 16, wherein the loading message comprises the identifier of the computation task and/or the execution logic of the computation task, and the execution logic comprises one or more of the following: a segment of executable code, an executable file, or an image file that can be loaded to a computation container.

18. The apparatus according to any one of claims 10 to 17, wherein the message of the computation task comprises: the loading message of the computation task, an update message of the computation task, or a deletion message of the computation task.

19. A communication apparatus, comprising a processor, wherein the processor is configured to run program instructions, so that the method according to any one of claims 1 to 9 is performed.

20. The apparatus according to claim 19, further comprising a memory, wherein the memory stores the program instructions.

21. The apparatus according to claim 19 or 20, wherein the apparatus is a chip or an integrated circuit.

22. A wireless network architecture, comprising a computation plane, wherein the computation plane is connected to a control plane through a first interface, the computation plane is connected to a user plane through a second interface, and the computation plane is configured to perform the method according to any one of claims 1 to 9.

23. A computer-readable storage medium, wherein the computer storage medium stores computer-readable instructions, and when the computer-readable instructions are run on a communication apparatus, the method according to any one of claims 1 to 9 is performed.

24. A computer program product, comprising instructions, wherein when the instructions are run on a communication apparatus, the method according to any one of claims 1 to 9 is performed.
